# EUROPEAN PATENT APPLICATION

(11) **EP 2 293 562 A2**
(43) Date of publication of application: **09.03.2011**
(21) Application number: 10173871.4
(22) Date of filing: 24.08.2010
(51) Int. Cl.: H04N 7/173

(54) **Contents reproducing device and method**

(30) Priority: 24.08.2009 KR 20090078359; 24.08.2009 KR 20090078308; 11.03.2010 KR 20100021951
(71) Applicant: SAMSUNG ELECTRONICS CO., LTD., Suwon-si, Gyeonggi-do (KR)
(72) Inventor: Sung, Ju-yun, Gyeonggi-do (KR); Choo, Hee-jeong, Gyeonggi-do (KR); Lee, Keum-koo, Gyeonggi-do (KR); Park, Soo-hong, Gyeonggi-do (KR); Kwahk, Ji-young, Gyeonggi-do (KR)
(74) Representative: Jenkins, Richard Gavin

(57) **Abstract**

A method for reproducing contents in a device is provided. The method includes identifying whether an event occurs based on a change in distance between a device and another device or a change in power status of the device or the another device, and if the event occurs, performing seamless play of contents between the another device and the device. Accordingly, seamless play may be performed effectively.

## Description

### PRIORITY

This application claims priority under 35 U.S.C. §119(a) to Korean Patent Application Nos. 2009-0078359, 2009-0078308, and 2010-0021951, filed on August 24, 2009, August 24, 2009, and March 11, 2010, respectively, in the Korean Intellectual Property Office, the entire contents of which are incorporated herein by reference.

### BACKGROUND OF THE INVENTION

### 1. Field of the Invention

The present invention relates generally to contents reproducing devices, and, more specifically, although not exclusively, to contents reproducing device and method for seamlessly reproducing contents in a plurality of devices.

### 2. Description of the Related Art

With the advent of various digital devices, the number of digital devices that users possess has increased significantly, and the various digital devices have become a part of users' lives.

These various digital devices enrich users' lives in many ways by making increasing the convenience of users' lives. In recent years, these digital devices have also become more sophisticated by supporting multiple functions.

Pursuit of more convenient and enriched user lifestyles has led to further development of digital devices that have more advanced and sophisticated functions.

However, the functions that digital devices can perform on their own are limited. Therefore, there is a need for a method for converging and combining each device owned by a user in order to create new functions that can be performed by a plurality of digital devices, thereby enabling the user to enjoy a more convenient and enriched lifestyle.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

An aspect of the present invention is to provide a device capable of reproducing contents continuously in conjunction with other apparatuses, and a system and a contents reproducing method using the same.

Another aspect of the present invention is to provide a device capable of reproducing contents in a way that a user can appreciate the contents appropriately for characteristics of the device.

According to one aspect of the present invention, a method for seamlessly reproducing contents in a plurality of devices is provided. The method includes if an event for seamless play between a first device, which is reproducing the contents, and a second device occurs, identifying property information on the first device and the second device; and if the property information of the first device and the second device is different from each other, performing, by the second device, seamless play by processing the contents into a version of the contents corresponding to the second device.

According to another aspect of the present invention, a contents reproducing method in a device is provided. The method includes identifying whether an event occurs based on a change in a distance between the device and another device or a change in a power status of the device or the another device; and if the event occurs, performing seamless play of contents between the another device and the device.

According to another aspect of the present invention, a display device is provided. The display device includes a display for displaying reproduced contents; and a controller for, if a distance between the display and a mobile terminal exceeds a predetermined distance while the contents are being displayed on the display or a turn-off command is input, processing to seamlessly reproduce the contents in the mobile terminal.

According to another aspect of the present invention, a mobile terminal is provided. The mobile terminal includes a touch screen for displaying contents and receiving input; and a controller for, if a distance between a display device and the mobile terminal exceeds a predetermined distance while the contents are being displayed on the display device or a turn-off command is input, seamlessly reproduces the contents through the touch screen.

Another aspect of the invention provides a computer program comprising instructions arranged, when executed, to implement a method and/or apparatus in accordance with any one of the above-described aspects. A further aspect provides machine-readable storage storing such a program. 4

### BRIEF DESCRIPTION OF THE DRAWINGS

The above and other features and advantages of aspects and embodiments of the present invention will be more apparent from the following detailed description when taken in conjunction with the accompanying drawings, in which:
FIG. 1 is a diagram illustrating a configuration of a network according to an embodiment of the present invention;
FIGs. 2 to 5 are flow diagrams illustrating seamless play while a user is out according to an embodiment of the present invention;
FIG. 6 is a flow diagram illustrating seamless play while a television is turned off according to an embodiment of the present invention;
FIGs. 7 to 10 are flow diagrams illustrating seamless play when a user returns according to an embodiment of the present invention;
FIG. 11 is a diagram illustrating a configuration of a network according to an embodiment of the present invention, in which metadata is provided along with broadcast information;
FIG. 12 is a diagram illustrating a configuration of a network according to an embodiment of the present invention, in which Electronic Program Guide (EPG) information is provided along with broadcast information;
FIG. 13 is a diagram illustrating a configuration of a network according to an embodiment of the present invention in which a logo of a broadcasting company is displayed along with broadcast information;
FIG. 14 is a diagram of a television including a display illustrating a logo of a broadcasting company displayed in a corner of a broadcasting screen of the television according to an embodiment of the present invention;
FIG. 15 is a diagram of a mobile phone including a display illustrating a logo of a broadcasting company displayed on a corner of a broadcasting screen of the mobile phone according to an embodiment of the present invention;
FIGs. 16 and 17 are diagrams of a mobile phone and a television, respectively, including displays illustrating examples of a Graphical User Interface (GUI) for determining whether successive reproduction of content is requested by a user according to an embodiment of the present invention;
FIGs. 18 to 21 are block diagrams illustrating detailed configuration of devices constituting a network structure according to embodiments of the present invention;
FIG. 22 is a flow diagram illustrating a process of successively reproducing mobile contents as non-premium contents on a first device and as premium contents on a second device according to an embodiment of the present invention;
FIG. 23 is a diagram of a mobile phone including a display illustrating a bookmark set on a predetermined point of mobile contents by a user according to an embodiment of the present invention;
FIG. 24 is a diagram of a television including a display illustrating a GUI for determining whether to successively reproduce contents as premium contents;
FIG. 25 is a diagram of a mobile phone including a display illustrating bookmarks set on a predetermined portion of a content according to an embodiment of the present invention;
FIG. 26 is a flow diagram illustrating a process of reproducing mobile contents that a user desires to view again as premium contents according to an embodiment of the present invention;
FIG. 27 is flow diagram illustrating a process of reproducing mobile contents such that a part of the contents are received through a Multimedia Messaging Service (MMS) as premium contents according to an embodiment of the present invention;
FIG. 28 is a flow diagram illustrating a process of reproducing mobile contents such that the contents are received for commercial purpose as premium contents in their entirety according to an embodiment of the present invention;
FIG. 29 is a detailed block diagram of a television according to an embodiment of the present invention; and
FIG. 30 is a detailed block diagram of a mobile phone according to an embodiment of the present invention.

### DETAILED DESCRIPTION OF EMBODIMENTS OF THE PRESENT INVENTION

Embodiments of the present invention are described in detail with reference to the accompanying drawings.

In the following description, the same or similar reference numerals may be used for the same or similar elements when they are illustrated in different drawings. Detailed descriptions of constructions or processes known in the art may be omitted to avoid obscuring the subject matter of the present invention.

### 1. Configuration of a Network System

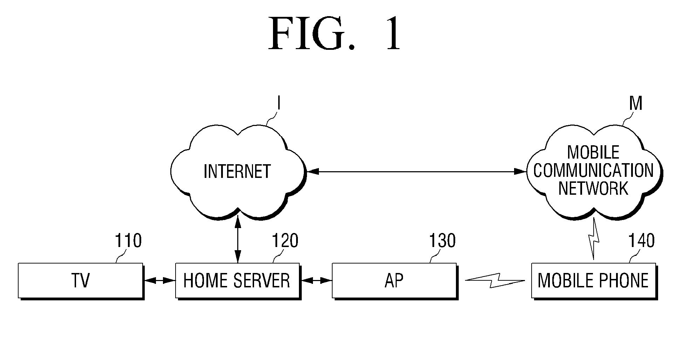

FIG. 1 is a diagram illustrating a configuration of a network according to an embodiment of the present invention. Referring to FIG. 1, a network system includes a TeleVvision (TV) 110, a home server 120, an Access Point (AP) 130, a mobile phone 140, Internet (I) and a Mobile communication network (M), which are communicably connected with each other.

Devices included in the network system in FIG. 1 are communicably connected with each other via the home server 120. Specifically, the home server 120 1) is directly and communicably connected with the TV 110 and the AP 130, 2) is communicable with the mobile phone 140 through the AP 130, 3) is communicable with the mobile phone 140 through the Internet (I) and the Mobile communication network (M), and 4) broadcast communication between the TV 110 and the AP 130, as well as communication between the TV 110 and the mobile phone 140, are performed through the Internet (I) and the Mobile communication network (M).

The network system illustrated in FIG. 1 may perform seamless play in various occasions described herein below.

### 2. Seamless Play While a User is Out

### 2.1 Reproducing a Broadcast in Real-time

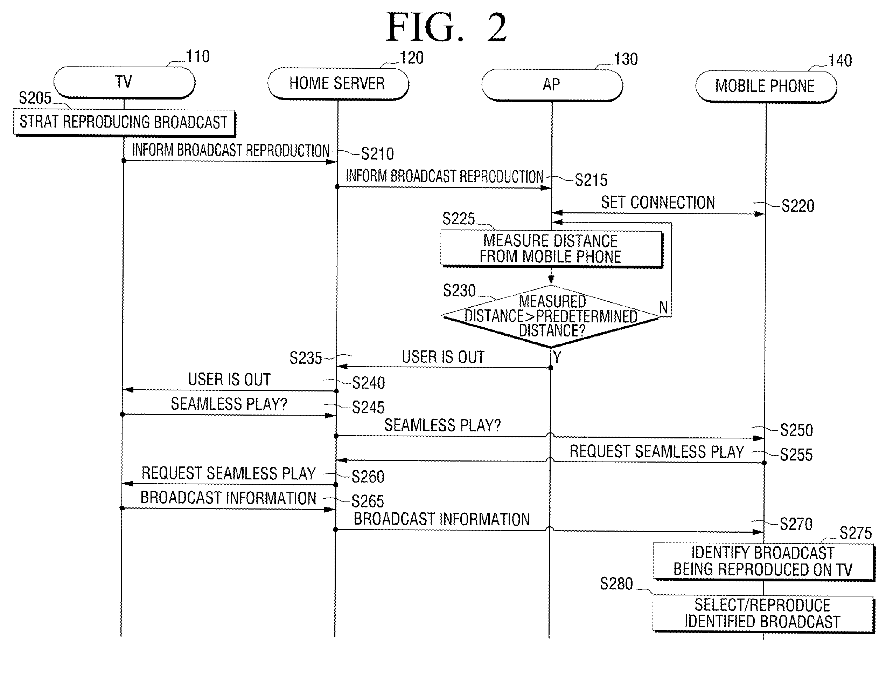

FIG. 2 is a flow diagram illustrating seamless play method where a user watches broadcast contents through the TV 110 and goes out (i.e., travels away from a home location) while carrying the mobile phone 140 according to an embodiment of the present invention.

As illustrated in FIG. 2, if a broadcast starts, in step S205, the TV 110 transmits a 'broadcast reproduction' message to the home server 120, in step S210. The home server 120 transmits the 'broadcast reproduction' message received in step S210 to the AP 130, in step S215. The AP 130, upon receiving the 'broadcast reproduction' message in step 215, searches the mobile phone 140 and establishes a connection with the mobile phone 140, in step S220. The AP 130 measures the distance between the AP 130 and the mobile phone 140, in step S225.

The distance measuring of step S225 may be performed periodically, and if the distance is measured at very short intervals, the measuring may be performed close to real-time.

If the distance measured in step S225 exceeds a predetermined distance, in step S230-Y, the AP 130 transmits a 'user is out' message to the home server 120, in step S235. The predetermined distance is a distance based on which it can be assumed that a user travels away from a home location, for example, while carrying the mobile phone 140.

The home server 120 transmits the 'user is out' message received in step S235 to the TV 110, in step S240.

The TV 110 which receives the 'user is out' message in step S240 generates an 'inquiry for seamless play' message and transmits the message to the home server 120, in step S245, and the home server 120 transmits the received 'inquiry for seamless play' to the mobile phone 140 through the Internet (I) and the mobile communication network (M), in step S250.

Subsequently, if the home server 120 receives a 'request for seamless play' from the mobile phone 140 through the Internet (I) and the mobile communication network (M), in step S255, the home server 120 transmits the received 'request for seamless play' to the TV 110, in step S260.

The 'request for seamless play' message is generated by the mobile phone 140 when a user requests seamless play through a GUI provided by the mobile phone 140, in response to the 'inquiry for seamless play' message.

The TV 110, upon receiving the 'request for seamless play' in step S260, generates a 'broadcast information' message including information regarding a broadcast that is currently being reproduced and transmits the 'broadcast information' message to the home server 120, in step S265. The home server 120 transmits the received 'broadcast information' message to the mobile phone 140 through the Internet (I) and the mobile communication network (M), in step S270.

The information regarding the broadcast that is currently being reproduced on TV 110 may include at least one of 1) broadcast channel, 2) broadcast title, 3) episode (season) number, and 4) current play time.

In step S275, the mobile phone 140 determines which broadcast is currently being reproduced on TV 110 (i.e., the broadcast that a user watched just before going out) based on the 'broadcast information' message received in step S270.

Subsequently, the mobile phone 140 selects and receives a same Digital Multimedia Broadcast (DMB) broadcast as the broadcast determined in step S275, and reproduces the received DMB broadcast, in step S280.

Accordingly, a user may continue to watch the same broadcast that the user was already viewing before going out.

According to the above-described embodiment of the present invention, the AP 130 measures the distance between the AP 130 and the mobile phone 140 and determines whether a user is going out or returns based on the distance. However, the distance between the AP 130 and the TV 110 is fixed in most times, and thus the distance measured by the AP 130 may alternatively represent the distance between the TV 110 and the mobile phone 140. Accordingly, in this alternative case, a determination of whether a user is going out or returning is based on the distance between the AP 130 and the mobile phone 140, i.e., whether a user is going out or returning is determined based on the distance between the TV 110 and the mobile phone 140.

Alternatively, the distance between the AP 130 and the TV 110 may be predetermined, and a total distance may be calculated by adding the actual distance between the AP 130 and the mobile phone 140 to the predetermined distance, and a determination of whether a user is going out or returning may be based on the result of the calculation.

### 2.2 Reproducing a Delayed Prerecorded Broadcast

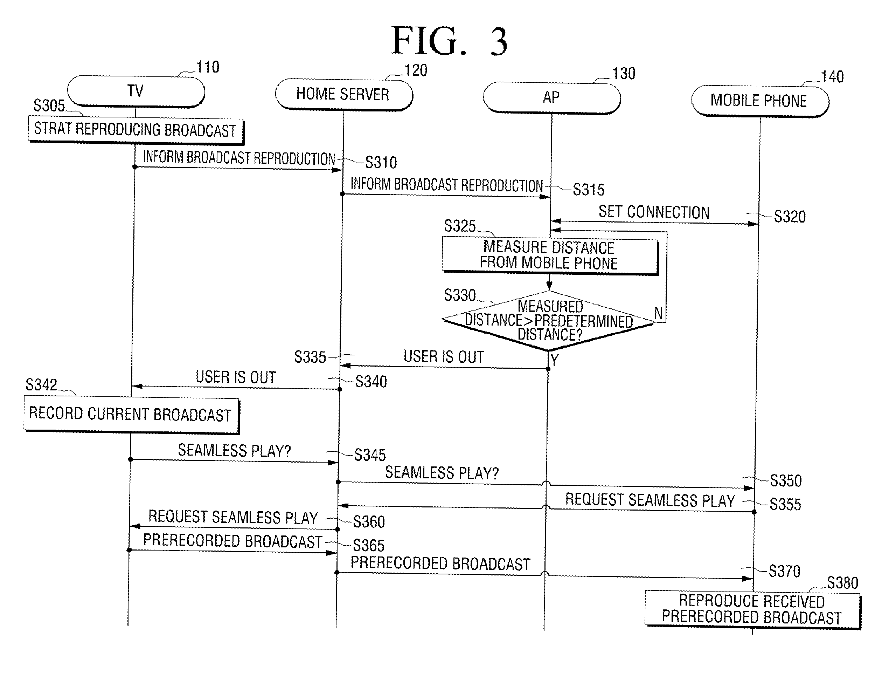

FIG. 3 is a flow diagram illustrating another seamless play method where a user watches broadcast contents through the TV 110 and goes out while carrying the mobile phone 140 according to an embodiment of the present invention.

Since steps S305 to S340 in FIG. 3 are the same as steps S205 to S240 in FIG. 2, the following description of the method of FIG. 3 is provided starting from step S342.

After receiving the 'user is out' message in step S340, the TV 110 starts recording a broadcast that is currently being reproduced, in step S342. Steps S345 to S360 are the same as steps S245 to S260 in FIG. 2, respectively.

The TV 110 that receives the 'request for seamless play' message in step S360 transmits the broadcast that has been recorded from step S342 to the home server 120, in step S365, and the home server 120 transmits the received prerecorded broadcast to the mobile phone 140 through the Internet (I) and the mobile communication network (M), in step S370.

Subsequently, in step S380, the mobile phone 140 reproduces the prerecorded broadcast received in step S370. Accordingly, a user may not only continue to watch the broadcast viewed before going out, but may also watch a part of the broadcast reproduced 'from when seamless play is requested to right before the broadcast is reproduced through the mobile phone 140.' Therefore, the user is able to watch the entire broadcast without missing any part of the broadcast.

In the above embodiment, the TV 110 performs recording of the broadcast, as an example. Alternatively, the home server 120 may record the broadcast instead of the TV 110.

### 2.3 Reproducing Contents Stored in a TV

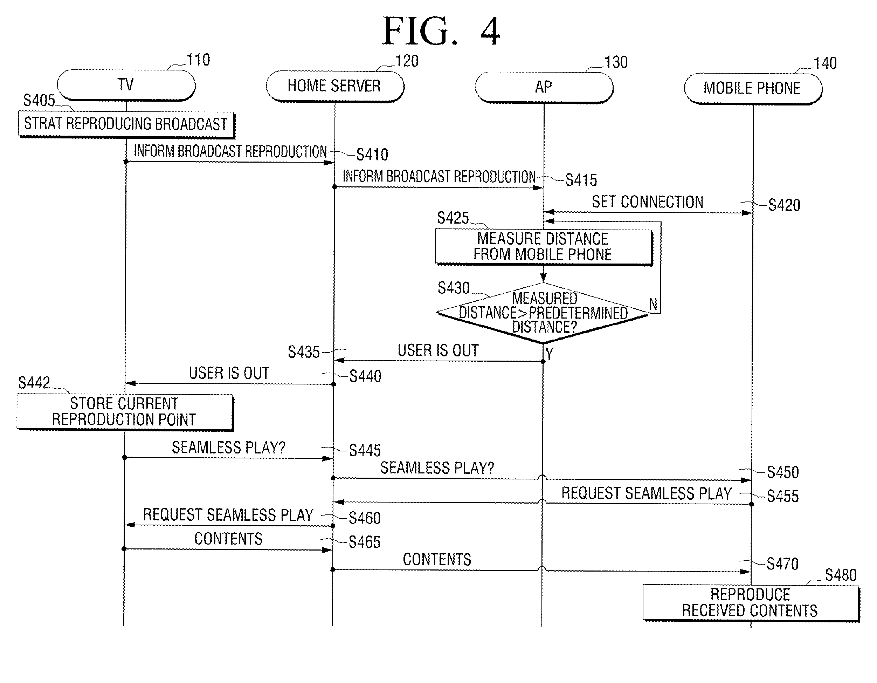

FIG. 4 is a flow diagram illustrating another seamless play method when a user watches contents stored in the TV 110 and goes out while carrying the mobile phone 140 according to an embodiment of the present invention.

Steps S405 to S440 in FIG. 4 are similar to steps S205 to S240 in FIG. 2, except that according to FIG. 4, contents stored in the TV 110 are reproduced instead of a broadcast received by the TV 110, and thus a detailed description of the method of FIG. 4 is provided from step S442, as follows.

The TV 110, upon receiving the 'user is out' message in step S440, stores a current reproduction time, in step S442. Steps S445 to S460 are the same as that of steps S245 to S260 in FIG. 2, respectively.

The TV 110, upon receiving the 'request for seamless play' in step S460, transmits the stored contents to the home server 120. Herein, only the contents reproduced from a reproduction point stored in step S442 are transmitted, in step S465. The home server 120 transmits contents received in step S465 to the mobile phone 140 through the Internet (I) and the mobile communication network (M), in step S470.

Subsequently, in step S480, the mobile phone 140 reproduces contents received in step S470. Accordingly, a user may continue to watch contents that the user was already viewing before going out.

### 2.4 Reproducing Contents Stored in a Home Server

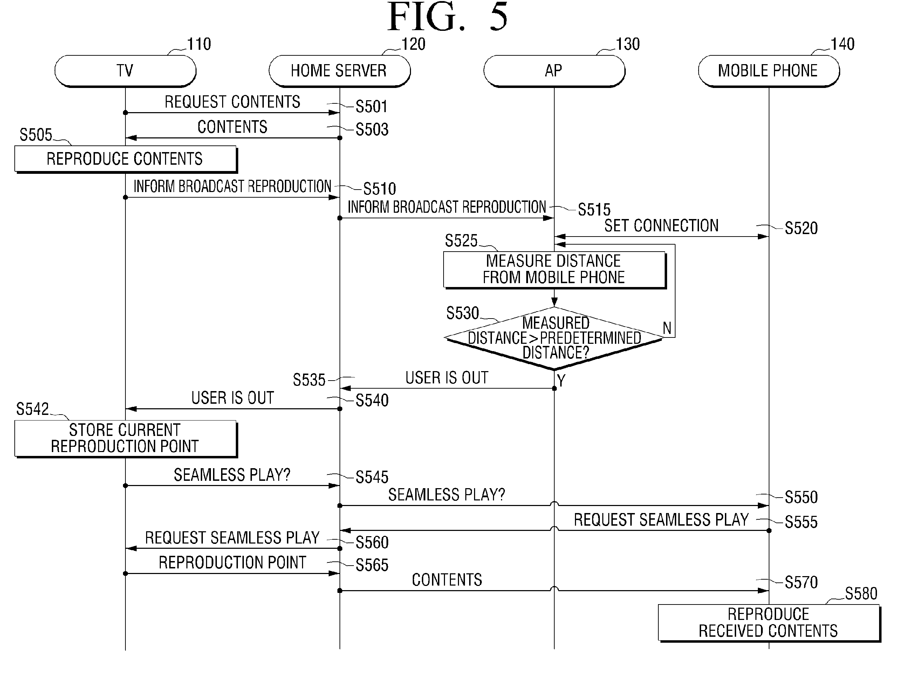

FIG. 5 is a flow diagram illustrating another seamless play method where a user watches contents stored in the home server 120 and goes out while carrying the mobile phone 140.

As illustrated in FIG. 5, the TV 110 transmits a 'request for contents' message to request, from the home server 120, contents selected by a user, in step S501. The TV 110 receives the contents selected by the user from the home server 120, in step S503.

Since steps S505 to S560 are similar to steps S405 to S460 in FIG. 4, a description of the method of FIG. 5 is provided from step S565.

The TV 110, upon receiving the 'request for seamless play' message in step S560, transmits information regarding a reproduction point stored in step S542 to the home server 120, in step S565.

Subsequently, the home server 120 transmits contents to the mobile phone 140 through the Internet (I) and the mobile communication network (M). Herein, in step S570, only the contents reproduced from a reproduction point received in step S565 are transmitted.

In step S580, The mobile phone 140 reproduces contents received in step S570. Accordingly, a user may continue to watch contents that the user was already viewing before going out.

### 3. Performing Seamless Play When a TV is Turned Off

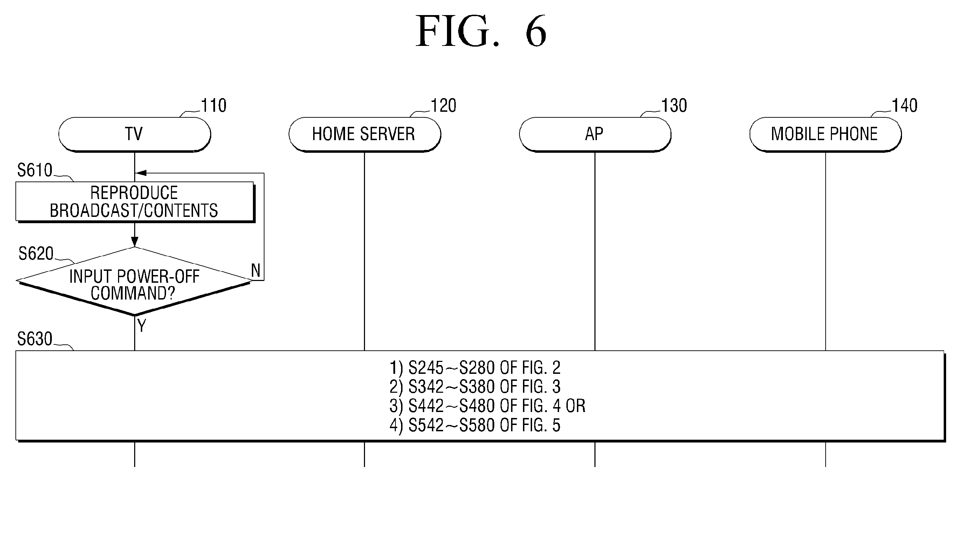

FIG. 6 is a flow diagram illustrating a seamless play method where a user watches broadcast or contents stored on the TV 110 and turns off the TV 110 to go out.

As illustrated in FIG. 6, while a broadcast or contents are being reproduced, in step S610, if a user inputs a command to turn off the TV 110, in step S620-Y, step S630 is performed. Specifically, 1) if a broadcast is being reproduced in real time, steps S245 to S280 in FIG. 2 are performed in step S620, 2) if a delayed prerecorded broadcast is reproduced, steps S342 to S380 in FIG. 3 are performed in step S620, 3) if contents stored in a TV are reproduced, steps S442 to S480 in FIG. 4 are performed in step S620, and 4) if contents stored in a home server is reproduced, steps S542 to S580 in FIG. 5 are performed in step S620.

Since the steps performed within step S620 are already explained with reference to FIGs. 1-5, a further description thereof is omitted for clarity.

Accordingly, if a user inputs a command to turn off the TV 110, the user may watch broadcast or contents that the user was watching through the TV 110 continuously through the mobile phone 140.

### 4. Performing Seamless Play When a User Returns Home

### 4.1 Reproducing a Broadcast in Real Time

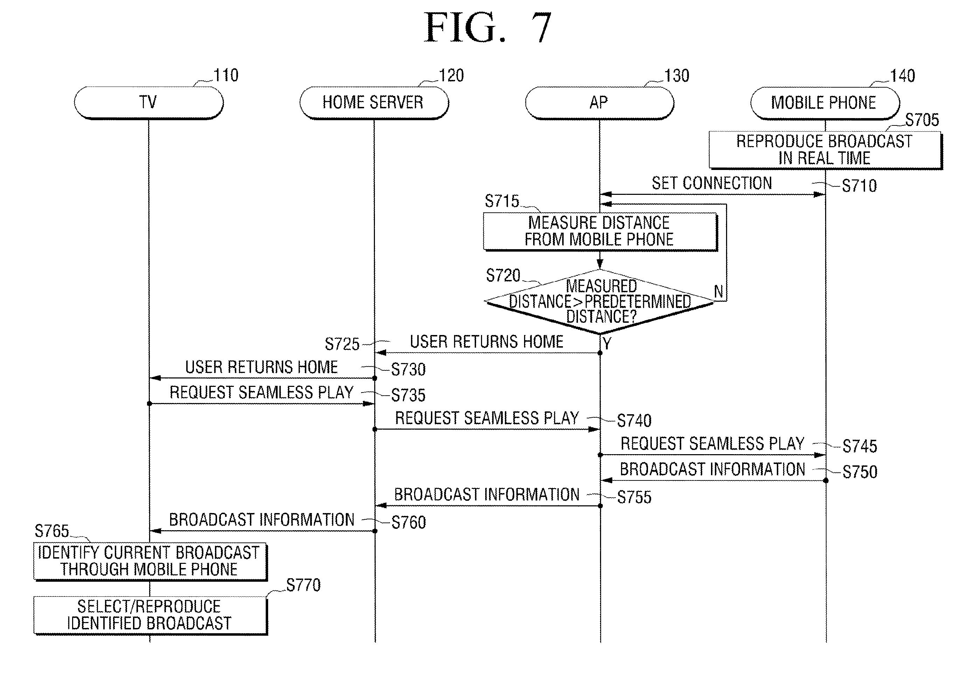

FIG. 7 is a flow diagram illustrating a seamless play method where a user watches contents through the mobile phone 140 in real time using the method described with reference to FIG. 2 and returns home.

As illustrated in FIG. 7, while a broadcast is being reproduced in real time through the mobile phone 140, in step S705, if a communication connection is set between the mobile phone 140 and the AP 130, in step S710, the AP 130 measures the distance between the AP 130 and the mobile phone 140, in step S715.

The communication connection is set between the mobile phone 140 and the AP 130, in step S710, when the user carrying the mobile phone 140 approaches the user's home.

The distance measuring of step S715 may be performed periodically, and if the distance is measured at very short intervals, the measuring may be performed almost in real-time.

If the distance measured in step S715 is less than a predetermined distance, in step S720-Y, the AP 130 transmits a 'user returns home' message to the home server 120, in step S725. The predetermined distance is a distance within which it can be assumed that the user carrying the mobile phone 140 returns home.

The home server 120 transmits the 'user returns home' message received in step S725 to the TV 110, in step S730.

Subsequently, if the home server 120 receives a 'request for seamless play' from the TV 110, in step S735, the home server 120 transmits the received 'request for seamless play' to the AP 130, in step S740. Then, the AP 130 transmits the 'request for seamless play' received in step S740 to the mobile phone 140, in step S745.

The mobile phone 140, upon receiving the 'request for seamless play' message in step S745, generates a 'broadcast information' message including information regarding a broadcast that is currently being reproduced and transmits the 'broadcast information' message to the AP 130, in step S750.

Subsequently, the AP 130 transmits the 'broadcast information' message received in step S750 to the home server 120, in step S755, and the home server transmits the 'broadcast information' message received in step S755 to the TV 110, in step S760.

The information regarding the broadcast that is currently being reproduced on the mobile phone 140 may include at least one of 1) broadcast channel, 2) broadcast title, 3) episode (season) number, and 4) current play time.

In step S765, the TV 110 determines which broadcast is currently being reproduced on the mobile phone 140 (i.e., the broadcast that a user was watching just before returning home) based on the 'broadcast information' message received in step S760.

The TV 110 selects and receives the same terrestrial broadcast or cable broadcast as the broadcast determined in step S765, and reproduces the received broadcast, in step S770.

Accordingly, a user may watch the same broadcast that the user was viewing through the mobile phone 140 before returning home continuously through a big screen of the TV 110, even after returning home.

### 4.2 Reproducing a Delayed Prerecorded Broadcast

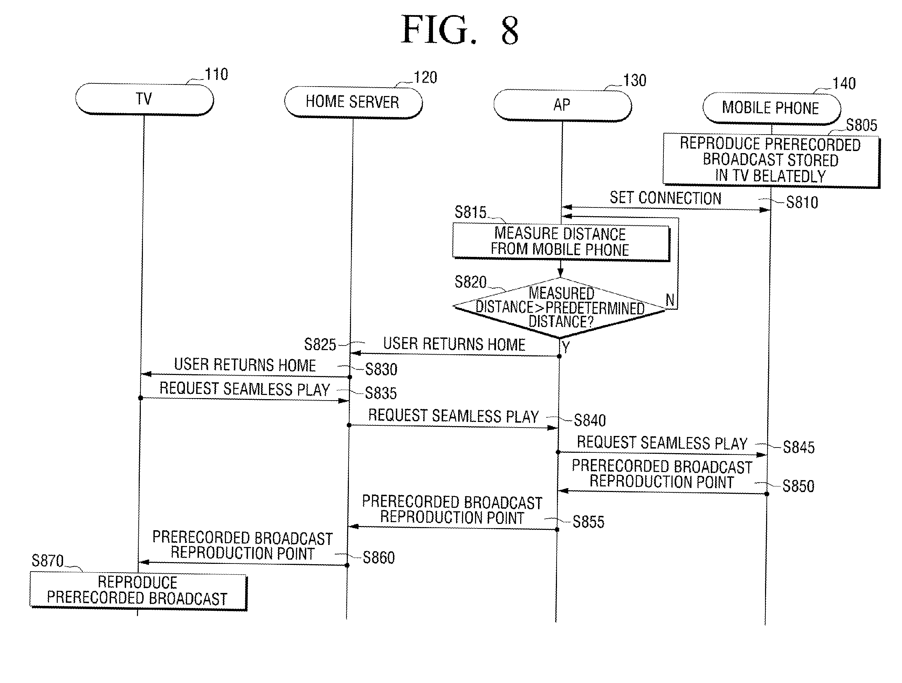

FIG. 8 is a flow diagram illustrating a method of performing seamless play where a user watches prerecorded broadcast of the TV 110 through the mobile phone 140 using the method described with reference to FIG. 3 and returns home according to an embodiment of the present invention.

Steps S805 to S845 in FIG. 8 describe 'reproducing prerecorded broadcast of the TV 110 belatedly', while steps S705 to S745 in FIG. 7 describe reproducing broadcast input to the TV 110 in real time and reproducing the broadcast that the TV 110 receives.

Steps S805 to S845 in FIG. 8 are similar to steps S705 to S745 in FIG. 7, except that steps S805 to S845 in FIG. 8 describe 'reproducing prerecorded broadcast of the TV 110 belatedly', while steps S705 to S745 in FIG. 7 describe 'reproducing broadcast input to the TV 110 in real time'. Therefore, a further description of steps S805 to S845 is omitted for conciseness, and thus description of FIG. 8 is provided from step S850.

The mobile phone 140, upon receiving the 'request for seamless play' in step S845, generates a 'prerecorded broadcast reproduction point' message including information regarding a reference point for reproducing prerecorded broadcast and transmits the message to the AP 130, in step S850.

Subsequently, in step S855, the AP 130 transmits the 'prerecorded broadcast reproduction point' message received in step S850 to the home server 120, and, in step S860, the home server 120 transmits the 'prerecorded broadcast reproduction point' message received in step S855 to the TV 110.

In step S870, the TV 110 reproduces prerecorded broadcast stored in the TV 110. However, in this case, the prerecorded broadcast is reproduced only from the prerecorded broadcast reproduction point received in step S860.

Accordingly, a user may watch the same prerecorded broadcast that the user was already viewing through the mobile phone 140 before returning home continuously through a big screen of the TV 110, even after returning home.

### 4.3 Reproducing Contents Stored in a TV

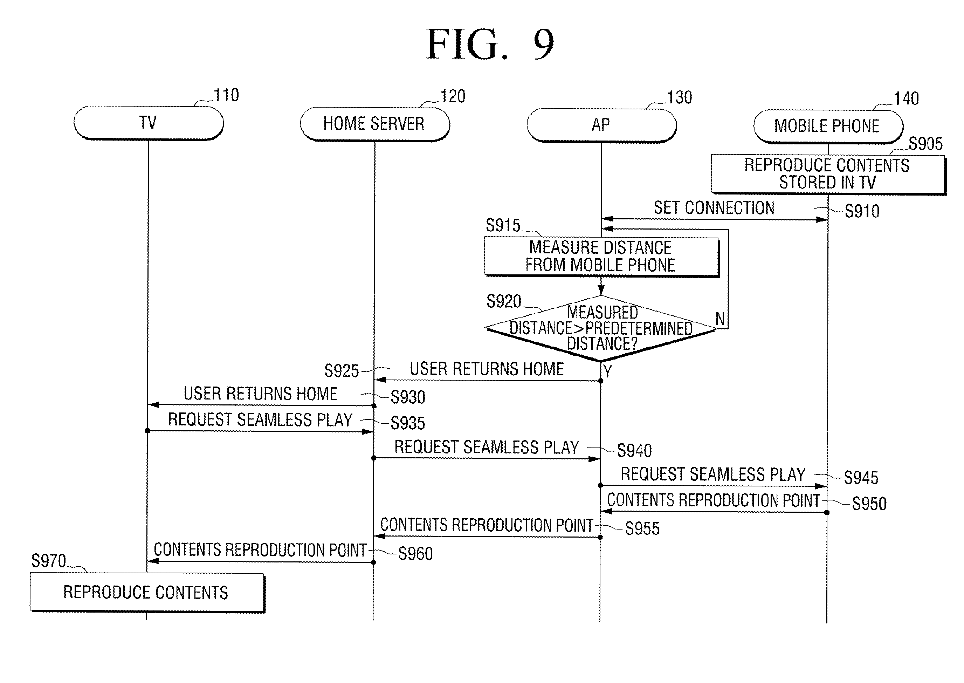

FIG. 9 is a flow diagram illustrating a method for performing seamless play when a user watches contents stored in the TV 110 through the mobile phone 140 using the method described with reference to FIG. 4 and returns home according to an embodiment of the present invention.

Steps S905 to S945 in FIG. 9 are similar steps S705 to S745 in FIG. 7, except that steps S905 to S945 in FIG. 9 describe 'reproducing contents stored in the TV 110', while steps S705 to S745 in FIG. 7 describe 'reproducing broadcast input to the TV 110 in real time', and therefore further description of steps S905 to S945 will be omitted for conciseness. Thus, a detailed description of the method of FIG. 9 is provided from step S950 as follows.

The mobile phone 140, upon receiving the 'request for seamless play' in step S945, generates a 'contents reproduction point' message including information regarding a reference point for reproducing contents that are currently being reproduced and transmits the message to the AP 130, in step S950.

Subsequently, the AP 130 transmits the 'contents reproduction point' message received in step S950 to the home server 120, in step S955, and the home server 120 transmits the 'contents reproduction point' message received in step S855 to the TV 110, in step S960.

The TV 110 reproduces contents stored in the TV 110, but only from the contents reproduction point received in step S960, in step S970.

Accordingly, a user may watch the contents that the user was already viewing through the mobile phone 140 before returning home continuously through a big screen of the TV 110, even after returning home.

### 4.4 Reproducing Contents Stored in a Home Server

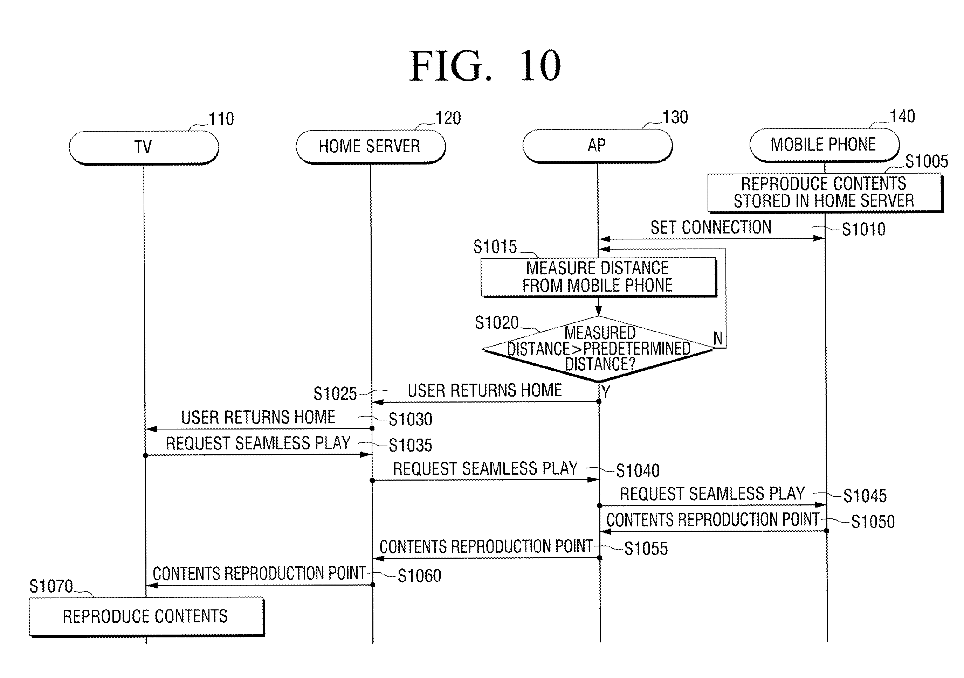

FIG. 10 is a flow chart illustrating a method of performing seamless play where a user watches contents stored in the home server 120 through the mobile phone 140 using the method described with reference to FIG. 5 and returns home according to an embodiment of the present invention.

Steps S1005 to S1070 in FIG. 10 are similar to steps S905 to S970 of FIG. 9, except that steps S1005 to S1070 describe 'reproducing contents stored in the home server 120', while steps S905 to S970 in FIG. 9 describe 'reproducing contents stored in TV 110'.

Other than the above-described differences, the seamless play method of FIG. 10 is the same as that of the seamless play method of FIG. 9, and therefore, a further description of the method of FIG. 10 is omitted for conciseness.

### 5. Broadcast Information

In FIG. 2, broadcast information regarding a broadcast that is currently being reproduced through the TV 110 is transmitted to the mobile phone 140 for seamless play. In FIG. 7, broadcast information regarding a broadcast that is currently being reproduced through the mobile phone 140 is transmitted to the TV 110 for seamless play.

Hereinafter, a detailed description regarding broadcast information exchanged between the TV 110 and the mobile phone 140 according to an embodiment of the present invention is provided.

### 5.1 Metadata

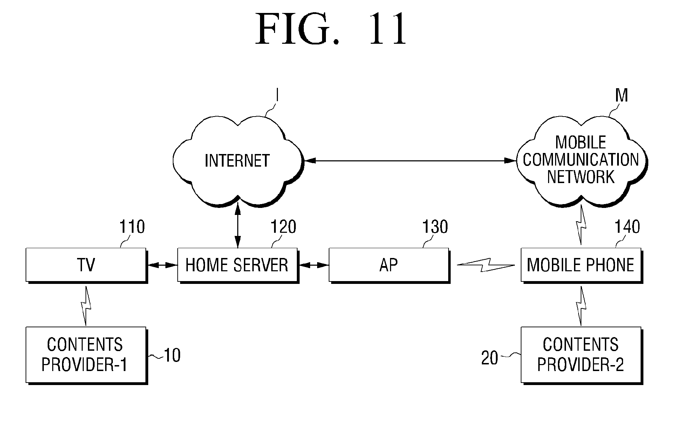

According to embodiments of the present invention, broadcast information may additionally be embodied as metadata, which is provided along with broadcast, which is explained in detail with reference to a network illustrated in FIG. 11.

Referring to FIG. 11, when a first contents provider 10 provides a broadcast to the TV 110, the first contents provider 10 also provides 'information regarding a channel through which the mobile phone 140 can receive the same broadcast from a second contents provider 20' in the form of metadata.

For example, if the first contents provider 10 provides an S-broadcast to the TV 110 and the second contents provider 20 provides the mobile phone 140 with the same S-broadcast through channel 20, the first contents provider 10 also provides the TV 110 with 'channel 20' in the form of metadata.

Accordingly, the TV 110 which receives the request for seamless play in step S260 in FIG. 2 transmits 'information regarding a channel which provides the same broadcast to the mobile phone 140' to the mobile phone 140, in steps S265 to S270.

The mobile phone 140 then receives a broadcast from the second contents provider 20 with reference to the channel information received in step S270 and reproduces the received broadcast.

Meanwhile, referring to FIG. 11, when a second contents provider 20 provides broadcast to the mobile phone 140, the second contents provider 20 also provides 'information regarding a channel through which the TV 110 can receive the same broadcast from a first contents provider 10' in the form of metadata.

For example, if the second contents provider 20 provides an S-broadcast to the mobile phone 140 and the first contents provider 10 provides the TV 110 with the same S-broadcast through channel 10, the second contents provider 20 also provides the mobile phone 140 with 'channel 10' in the form of metadata.

Accordingly, the mobile phone 140, upon receiving the request for seamless play in step S745 in FIG. 7, transmits 'information regarding a channel which provides the same broadcast to the TV 110' to the TV, in steps S750 to S760.

The TV 110 then receives broadcast from the first contents provider 10 with reference to the channel information received in step S760 and reproduces the broadcast.

Meanwhile, referring to FIG. 11, the first contents provider 10, which provides broadcast to the TV 110, and the second contents provider 20, which provides broadcast to the mobile phone 140, are different entities from each other as an example. However, the first contents provider 10 and the second contents provider 20 may be embodied as one provider in accordance with embodiment of the present invention.

### 5.2 EPG Information

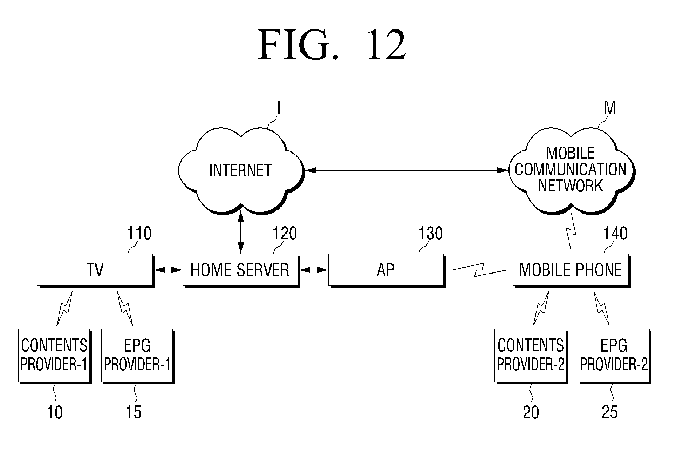

'Broadcast information may be embodied as 'EPG information' which is provided along with broadcast, this will be explained in detail with reference to a network illustrated in FIG. 12.

Referring to the network illustrated in FIG. 12, the first contents provider 10 provides broadcast to the TV 110, and a first EPG provider 15 provides EPG information regarding the broadcast that the TV 110 receives. The first contents provider 10 and the first EPG provider 15 may belong to a same provider, and in this case, the two parties may be integrated as one.

'The EPG information regarding the broadcast provided to the TV 110' includes 'information regarding the same broadcast provided from the second contents provider 20'.

Accordingly, the TV 110 which receives the request for seamless play in step S260 in FIG. 2 transmits the EPG information to the mobile phone 140, in steps S265 and S270.

Subsequently, the mobile phone 140 extracts 'information regarding the same broadcast provided by the second contents provider 20' from the EPG information received in step S270, and receives the broadcast from the second contents provider 20 and reproduces the broadcast.

Meanwhile, the EPG information may be provided from the first EPG provider 15 to the TV 110 only when there is a request by a user. Alternatively, the EPG information may also be provided automatically without a user's request.

'The EPG information regarding the broadcast provided to the TV 110' may not include 'information regarding the same broadcast provided from the second contents provider 20', and instead, a separate information provider (not shown) may provide 'EPG information regarding the same broadcast provided from the second contents provider 20' to the TV 110.

In addition, in steps S265 and S270 in FIG. 2, the TV 110 may transmit only 'the information regarding the same broadcast provided from the second contents provider 20' from among the EPG information to the mobile phone 140.

Meanwhile, in the network illustrated in FIG. 12, the second contents provider 20 provides broadcast to the mobile phone 140, and the second EPG provider 25 provides EPG information regarding the broadcast provided to the mobile phone 140. The second contents provider 20 and the second EPG provider 25 may belong to a same provider, and in this case, the two parties may be integrated as one.

'The EPG information regarding the broadcast provided to the mobile phone 140' includes 'information regarding the same broadcast provided from the first contents provider 10'.

Accordingly, the mobile phone 140 which receives the request for seamless play in step S745 in FIG. 7 transmits the EPG information to the TV 110, in steps S750 to S760.

Subsequently, the TV 110 extracts 'information regarding the same broadcast provided by the first contents provider 10' from the EPG information received in step S760, and receives the broadcast from the first contents provider 10 and reproduces the broadcast.

Meanwhile, the EPG information may be provided from the second EPG provider 25 to the mobile phone 140 only when there is a request by a user. Alternatively, the EPG information may also be provided automatically without a user's request.

'The EPG information regarding the broadcast provided to the mobile phone 140' may not include 'information regarding the same broadcast provided from the first contents provider 10', and instead, a separate information provider (not shown) may provide 'EPG information regarding the same broadcast provided from the first contents provider 10' to the mobile phone 140.

In addition, in steps S750 to S760 in FIG. 7, the mobile phone 140 may transmit only 'the information regarding the same broadcast provided from the first contents provider 10' from among the EPG information to the TV 110.

### 5.3 Logo of a Broadcast Company

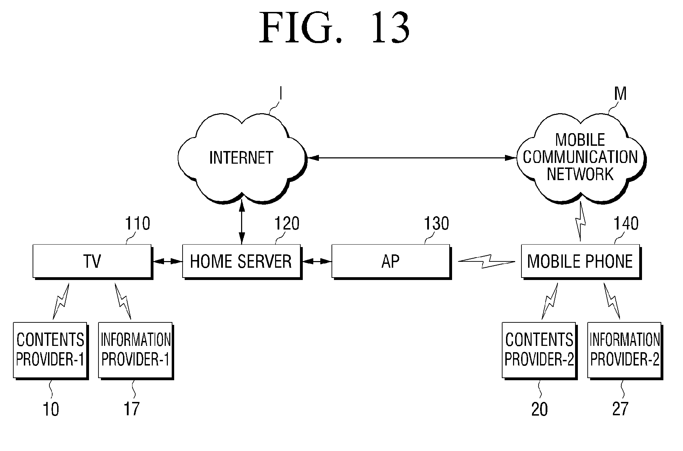

Broadcast information may include a broadcast company logo that is displayed along with a broadcast program. Broadcast company logos according to embodiments of the present invention are explained in further detail herein with reference to FIGs. 13 to 15.

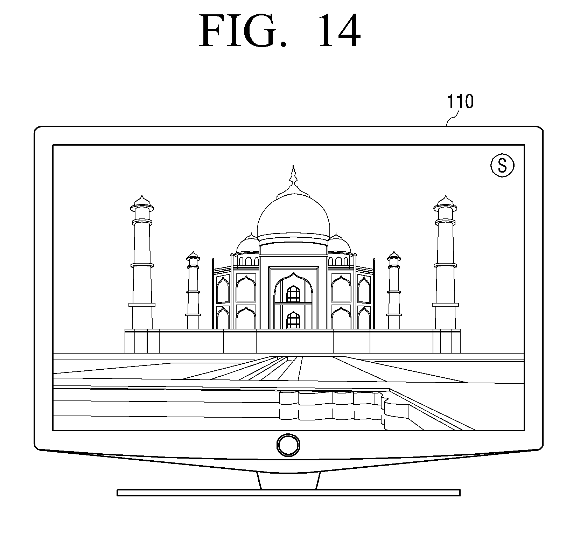

Referring to FIG. 14, if the TV 110 displays a broadcast program, the logo of a broadcast company may be displayed in one corner of the broadcast screen. The TV 110 may recognize the broadcast company logo on the broadcast screen, and transmit the recognized broadcast company logo to a first information provider 17 and receive information regarding broadcasts that are provided by the broadcast company using the recognized broadcast company logo from among broadcasts provided to the mobile phone 140.

Accordingly, the TV 110, upon receiving a request for seamless play, such as in step S260 of FIG. 2, transmits, to the mobile phone 140, information regarding broadcasts that are provided by the broadcast company using the recognized broadcast company logo, in steps S265 and S270.

Subsequently, the mobile phone 140 receives broadcast from the second contents provider 20 based on the information received in step S270 and reproduces the broadcast.

Meanwhile, in steps S265 and S275 of FIG. 2, the TV 110 may provide the information regarding the recognized broadcast company logo to the mobile phone 140, and the mobile phone 140 may provide the information regarding the broadcast company logo to the second contents provider 20, so that the broadcasts provided by the broadcast company using the logo can be received directly.

In addition, the mobile phone 140 may transmit the information regarding the broadcast company logo to the second information provider 27, instead of the second contents provider 20, so as to receive information regarding broadcasts provided by the broadcast company using the logo and to receive broadcast from the second contents provider 20 using the provided information.

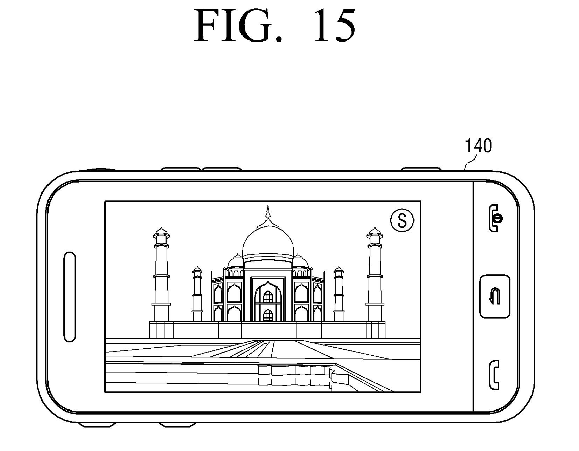

Meanwhile, as illustrated in FIG. 15, if the mobile phone 140 displays a broadcast program, the logo of a broadcast company may appear in one corner of the broadcast screen. The mobile phone 140 may recognize the broadcast company logo on the broadcast screen, and transmit the recognized broadcast company logo to the second information provider 27 and receive information regarding broadcasts which are provided by the broadcast company using the recognized broadcast company logo from among broadcasts provided to the TV 110.

Accordingly, the mobile phone 140, upon receiving the request for seamless play in step S745 in FIG. 7, transmits, to the TV 110, information regarding broadcasts which are provided by the broadcast company using the recognized broadcast company logo, in steps S750 to S760.

Subsequently, the TV 110 receives a broadcast from the first contents provider 10 based on the information received in step S760 and reproduces the broadcast.

Meanwhile, in steps S750 to S760 of FIG. 7, the mobile phone 140 may provide the information regarding the recognized broadcast company logo to the TV 110, and the TV 110 may provide the information regarding the broadcast company logo to the first contents provider 10, so that the broadcasts provided by the broadcast company using the logo can be received directly.

In addition, the TV 110 may transmit the information regarding the broadcast company logo to the first information provider 17, instead of the first contents provider 10, so as to receive information regarding broadcasts provided by the broadcast company using the logo and to receive broadcast from the first contents provider 10 using the provided information.

### 6. GUI

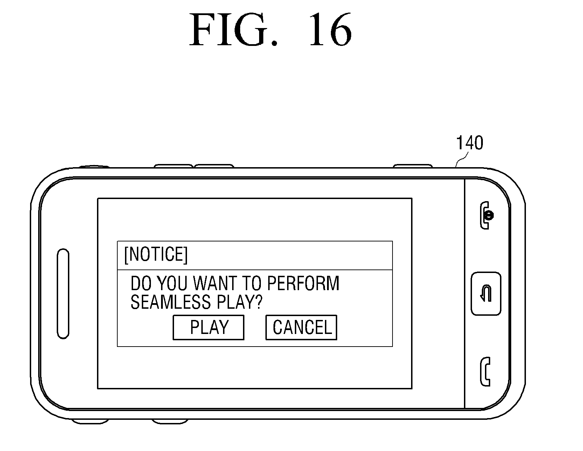

FIG. 16 illustrates an example of a GUI in which the mobile phone 140, upon receiving the 'inquiry for seamless play' in step S250 of FIG. 2, step S350 of FIG. 3, step S450 of FIG. 4, and/or step S550 of FIG. 5, outputs a menu for receiving a user input for determining whether seamless play is requested.

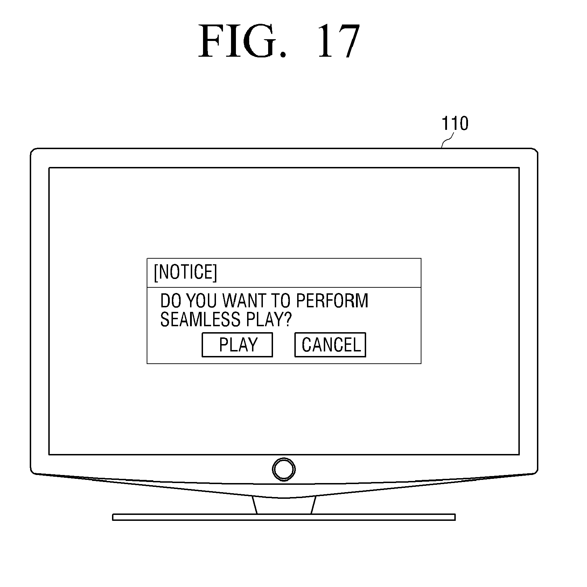

FIG. 17 illustrates an example of a GUI in which the TV 110, upon receiving the 'user returns home' message in step S730 of FIG. 7, step S830 of FIG. 8, step S930 of FIG. 9 and/or step S1030 of FIG. 10 receives user input for determining whether seamless play is requested.

### 7. Change of Network

The network illustrated in FIG. 1 is only an example, and other networks may be used according to embodiments of the present invention. For example, the function of the home server 120 may be incorporated into the TV 110, and the home server 120 may be removed. In this case, as well as in the case illustrated in FIG. 1, the TV 110 and the mobile phone 140 may transmit/receive contents, message, and other information through the AP 130. In these cases, the TV 110 and the mobile phone 140 may perform communication according to an infrastructure network communication method.

Alternatively, the TV 110 and the mobile phone 140 may be connected directly and communicably to each other without going through the AP 130 so that contents, message, and other information may be directly exchanged between the TV 110 and the mobile phone 140. In this case, the TV 110 and the mobile phone 140 may form an ad-hoc network to communicate according to an ad-hoc network communication method.

### 8. Detailed Configuration of Devices Forming a Network

### 8.1 TV

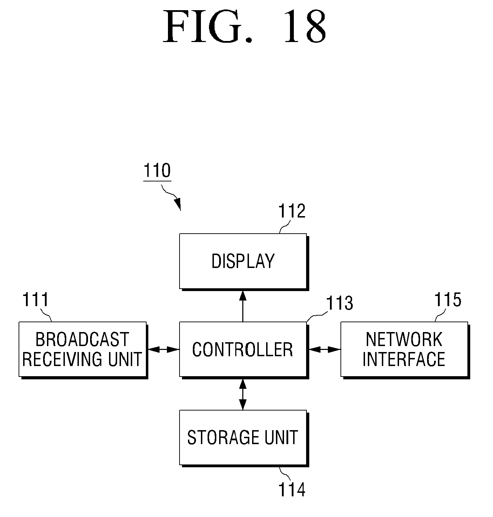

FIG. 18 is a detailed block diagram of the TV 110 illustrated in FIG. 1 according to an embodiment of the present invention. As illustrated in FIG. 18, the TV 110 includes a broadcast receiving unit 111, a display 112, a controller 113, a storage unit 114, and a network interface 115.

The broadcast receiving unit 111 performs basic functions of the TV 110, such as receiving broadcasts via air, cable or satellite. The display 112 displays broadcasts provided to the broadcast receiving unit 111 and the afore-mentioned GUI. The storage unit 114 provides a storage space for programs and data that are necessary to drive the TV 110 and for contents and prerecorded broadcasts. The network interface 115 is communicably connected to the surrounding home server 120. The controller 113 controls the broadcast receiving unit 111, the display 112, the storage unit 114, and the network interface 115 to perform operations of the TV 110, such as the operations described with reference to FIGs. 2 to 10.

### 8.2 Home Server

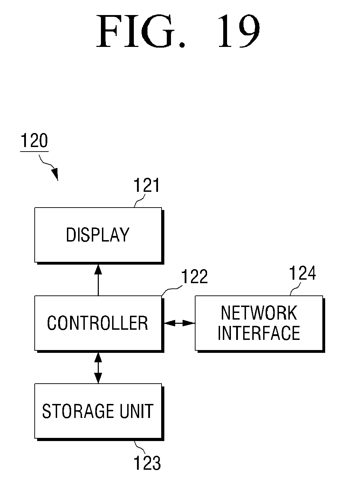

FIG. 19 is a detailed block diagram of the home server 120 illustrated in FIG. 1. Referring to FIG. 19, the home server 120 includes a display 121, a controller 122, a storage unit 123, and a network interface 124. The display 121 may display operation status information of the home server 120, a controlling screen, etc. The storage unit 123 provides a storage space for programs and data that are used to drive the home server 120 and for contents. The network interface 124 is communicably connected to the surrounding TV 110 and the AP 130 and accesses the Internet (I). The controller 122 controls the display 121, the storage unit 123, and the network interface 124 to perform operations of the home server 120, such as the operations described with reference to FIGs. 2 to 10.

### 8.3 AP

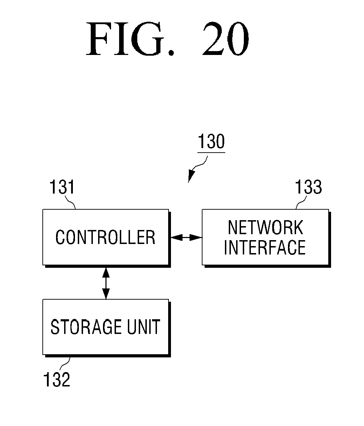

FIG. 20 is a detailed block diagram of the AP 130 illustrated in FIG. 1. As illustrated in FIG. 20, the AP 130 includes a controller 131, a storage unit 132, and a network interface 133.

The storage unit 132 provides a storage space for programs and data that are used to drive the AP 130. The network interface 133 is communicably connected to the surrounding home server 120 and the mobile phone 140. The controller 131 controls the storage unit 132 and the network interface 133 to perform operations of the AP 130, such as the operations described with reference to FIGs. 2 to 10.

### 8.4 Mobile Phone

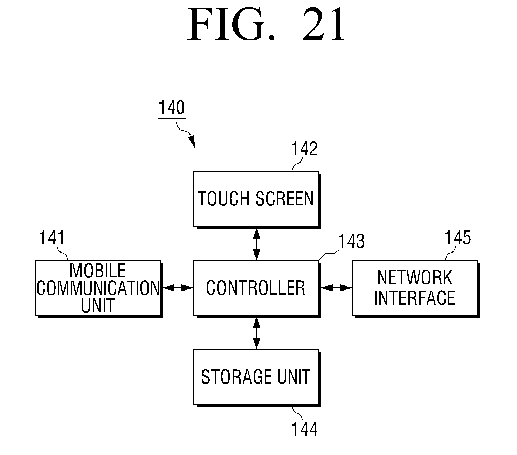

FIG. 21 is a detailed block diagram of the mobile phone 140 illustrated in FIG. 1. As illustrated in FIG. 21, the mobile phone 140 includes a mobile communication unit 141, a touch screen 142, a controller 143, a storage unit 144, and a network interface 145. The mobile communication unit 141 performs basic and auxiliary functions of the mobile phone 140, such as mobile telephone communication, Short Messaging Service (SMS) operations, DMB broadcast reception, and photography.

The touch screen 142 displays mobile telephone communication information of the mobile communication unit 141, a screen for providing SMS, DMB broadcast, contents, and the aforementioned GUI. The touch screen 142 also receives a user commands through touch input.

The storage unit 144 provides a storage space for programs and data that are used to drive the mobile phone 140 and for contents.

The network interface 145 is communicably connected to the surrounding AP 130.

The controller 143 controls the mobile communication unit 141, the touch screen 142, the controller 143, the storage unit 144, and the network interface 145 to perform operations of the mobile phone 140, such as the operations described with reference to FIGs. 2 to 10.

### 8.5 Other Devices

The network illustrated and described with reference to FIG. 1 is merely an example, and the present invention may be applied to networks that include devices that are different from those illustrated in FIG. 1.

### 9. Change of Contents

According to various embodiments of the present invention, such as described herein above, seamless play of contents may be performed among a plurality of devices. Meanwhile, the devices performing the seamless play may have different characteristics. More specifically, mobile devices such as a mobile phone and a Personal Digital Assistant (PDA) have size limitations, and thus have a small display screen, which makes it difficult to integrate various signal conversion chips. By contrast, devices such as a TV and a monitor have relatively fewer size limitations, and thus may have big display screens and a number of various integrated signal conversion chips.

Accordingly, even when contents are the same, it is more reasonable to reproduce the contents in an appropriate manner for each device, in consideration of the respective characteristics of each device.

Hereinafter, a method for reproducing contents adaptably, not only when contents are reproduced seamlessly among a plurality of devices, but also when contents are reproduced in their entirety is described with various embodiments.

### 9.1 Seamless Reproduction Contents that are not Reproduced as Mobile Contents are as Premium Contents

### 9.1.1 Reproduction of Mobile Contents in a Mobile Phone

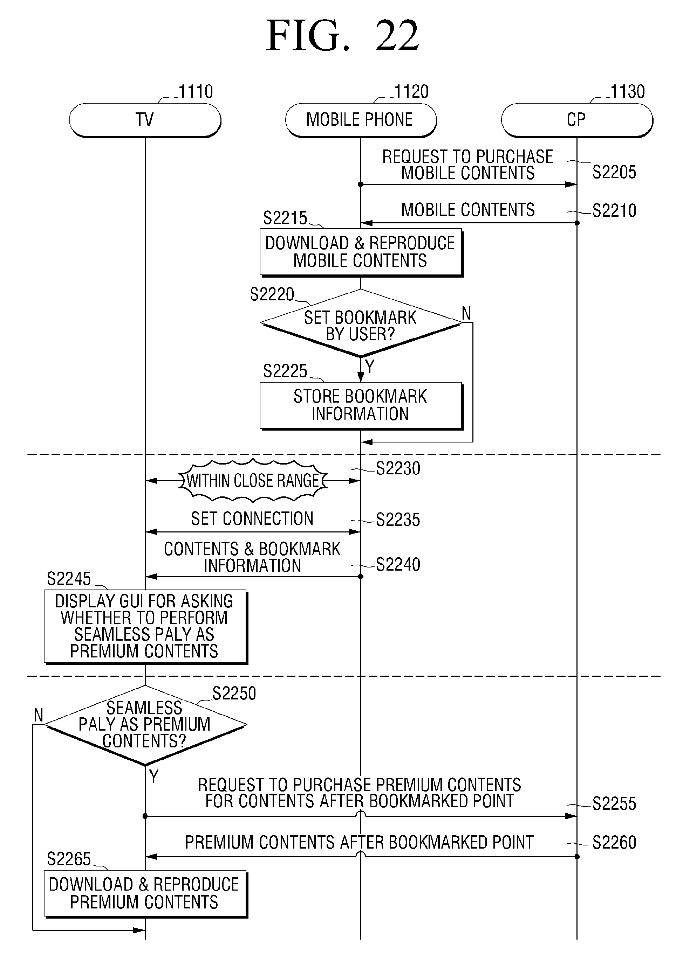

FIG. 22 is a flow diagram illustrating a process of successively reproducing mobile contents as non-premium contents on a first device and as premium contents on a second device according to an embodiment of the present invention.

Referring to FIG. 22, if a mobile phone 1120 transmits a request for purchasing mobile contents to a Contents Provider (CP) 1130, in step S2205, the CP 1130 transmits the purchased mobile contents to the mobile phone 1120, in step S2210.

The mobile phone 1120 downloads the mobile contents and reproduces the contents, in step S2215. Accordingly, a user may watch the reproduced mobile contents through the mobile phone 1120. The mobile contents may be low-priced contents with relatively poor resolution and image quality that are appropriate for viewing through a small mobile phone having a small display.

If a user is in a situation where it is difficult to view the mobile contents through the mobile phone 1120 (such as, when the user exits a bus or a subway, or a battery of the mobile phone 1120 is not sufficient for content reproduction), the user may set a bookmark on a current reproduction point.

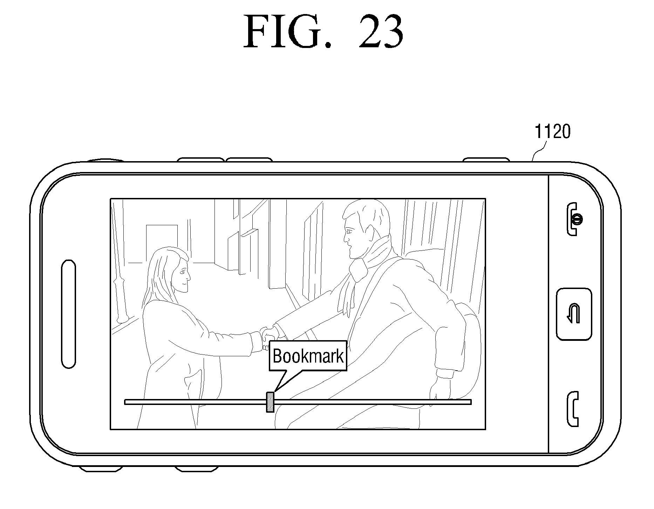

If the user sets a bookmark, in step S2220-Y, the mobile phone 1120 stores information regarding location of the bookmark, in step S2225. FIG. 23 illustrates an example screen display of the mobile phone 1120 in which a bookmark is set on a predetermined point of mobile contents by a user according to an embodiment of the present invention.

### 9.1.2 Preparation to Seamlessly Reproduce Mobile Contents as Premium Contents

If a user returns home (i.e., the mobile phone 1120 is close to the TV 1110), in step S2230, a communicable connection is set between the mobile phone 1120 and the TV 1110, in step S2235.

If the connection in step S2235 is completed, the mobile phone 1120 transmits information regarding contents and bookmark to the TV 1110, in step S2240. The information regarding contents and the bookmark that is transmitted from the mobile phone 1120 to the TV 1110 in step S2240 may include: 1) information regarding mobile contents on which a bookmark is set (e.g., the title of the mobile contents and episode (season) number) and 2) information regarding the location of a bookmark.

Subsequently, the TV 1110 generates a GUI for receiving user input according to a user determination of whether to reproduce contents as premium contents seamlessly, and displays the generated GUI, in step S2245. The premium contents may include highpriced contents with high resolution and image quality that are appropriate for viewing contents on a big display of the TV 1110.

The GUI generated in step S2245 is for GUI asking whether to seamlessly reproduce mobile contents after a bookmark by purchasing premium contents.

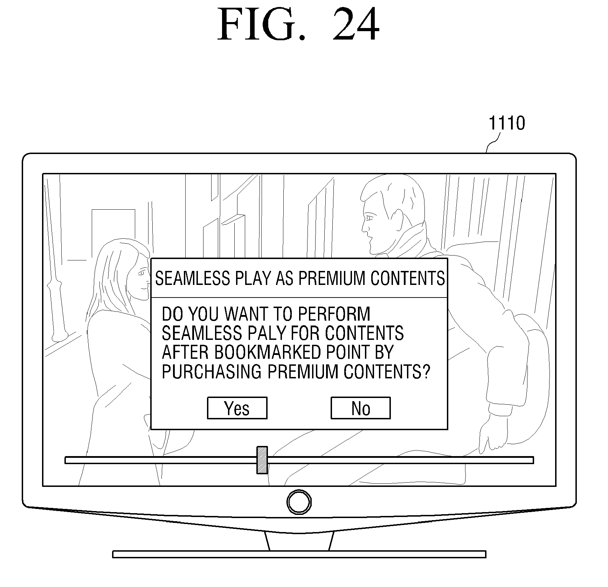

FIG. 24 illustrates the TV 1110 with the GUI. According to FIG. 24, a bookmark scene is displayed on the TV 1110 with the GUI. The scene displayed on the TV 1110 illustrated in FIG. 24 has low quality, since the scene is transmitted from the mobile phone 1120 and then enlarged.

A user may decide whether to view the mobile contents after a bookmark as premium contents based on the image quality of the bookmarked scene displayed on the current screen of the TV 1110.

### 9.1.3 Seamless Play of Premium Contents through a TV

In step S2250-Y, if a user requests 'seamless play as premium contents' through a GUI provided in step S2245, the TV 1110 requests the CP 1130 to provide premium contents, which are the same as the mobile contents, based on the information received in step S2240. In this case, only contents after a bookmark are requested, in step S2255, in order to reduce costs compared to costs for purchasing entire premium contents, which are relatively expensive.

The CP 1130, to the TV1110 transmits the part of the premium contents that are requested for purchase, in step S2260. The TV 1110 downloads the part of the premium contents received in step S2260 and reproduces the downloaded contents, in step S2265.

Accordingly, the user may continuously view the same mobile contents that the user was watching before returning home, through the mobile phone 1120, as premium contents through the TV 1110, even after returning home. Since the user is only charged for a portion of the premium contents, the user may view the premium contents at a reasonable rate.

### 9.2 Reproduction of Mobile Contents That a User Desires to View Again as Premium Contents

In the above embodiment, a bookmark is used to mark a point where a user stops watching contents. However, a bookmark can also be used to mark a point that a user wishes to watch again.

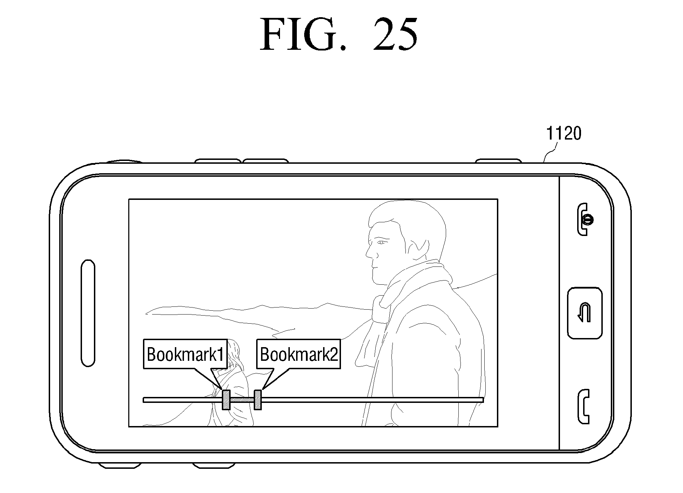

In this case, a bookmark can be set on a 'specific point', that is on a still scene, but a bookmark can also be set on a 'specific section'. More specifically, as illustrated in FIG. 25, a bookmark can be set on the section between 'Bookmark1' and 'Bookmark2'.

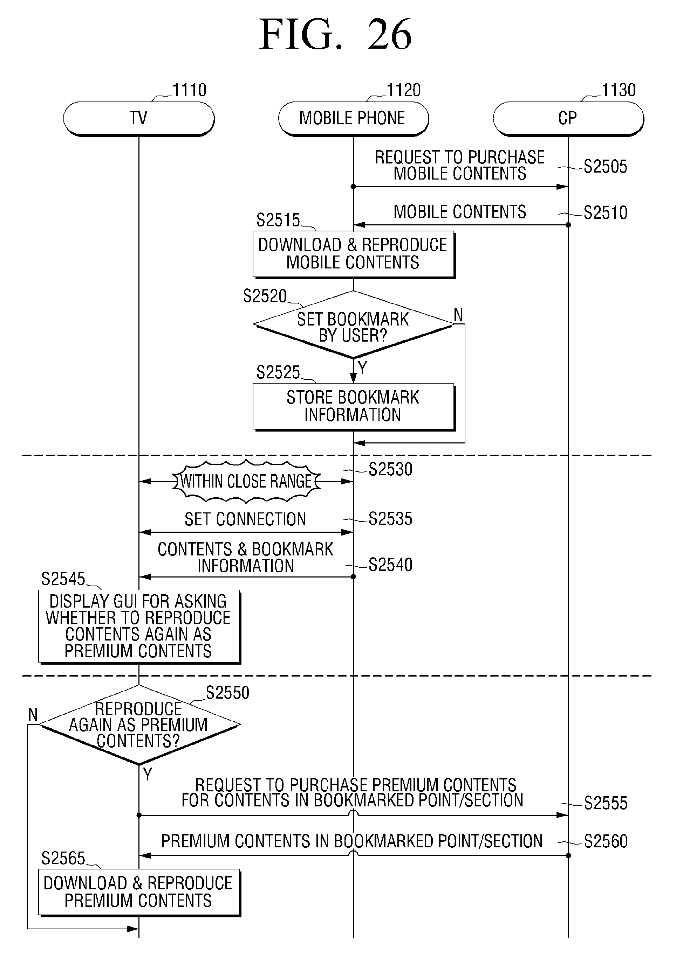

The point and/or section of mobile contents that a user sets a bookmark on while watching the mobile contents through the mobile phone 1120 to watch the contents again later may also be reproduced as premium contents. This process is explained in detail herein with reference to FIG. 26.

### 9.2.1 Reproduction of Mobile Contents in a Mobile Phone

Since steps S2505 to S2525 of FIG. 26 are similar to the detailed description of steps S2205 to S2225 of FIG. 22, a further description of steps S2505 to S2525 is not be provided for conciseness.

The bookmark set by a user in step S2520 and the bookmark stored in the mobile phone 1120 in step S2525 may be a specific point and/or a specific section that the user wishes to revisit later.

### 9.2.2 Preparation to Reproduce Mobile Contents Again as Premium Contents

Since steps S2530 to S2540 in FIG. 26 are similar to steps S2230 to S2240 in FIG. 22, a further description of steps S2530 to S2540 is not provided for conciseness.

The GUI provided in step S2545 is a GUI for requesting user input used for determining whether to reproduce mobile contents again as premium contents. More specifically, the GUI is for determining whether to reproduce a specific point and/or section of mobile contents bookmarked by a user again as premium contents instead of mobile contents.

### 9.2.3 Reproduction of Contents Again as Premium Contents on a TV

Since steps S2550 to S2565 of FIG. 26 are similar to steps S2250 to S2265 in FIG. 22, a further description of steps S2550 to S2565 is not provided for conciseness.

The premium contents purchased in steps S2555 and S2560 are only for bookmarked point and/or section that can be determined from the information received in step S2540. Fees for reproducing determined premium contents are charged only for the bookmarked point and/or section.

### 9.3 Reproduction of a Part of Mobile Contents Received Through MMS Again as Premium Contents

In the above-described embodiment of the present invention, mobile contents purchased through the mobile phone 1120 are reproduced, but a part of mobile contents received from others through MMS may also be reproduced as premium contents. In this case, the CP 1130 sells the same premium contents as the mobile contents received through MMS.

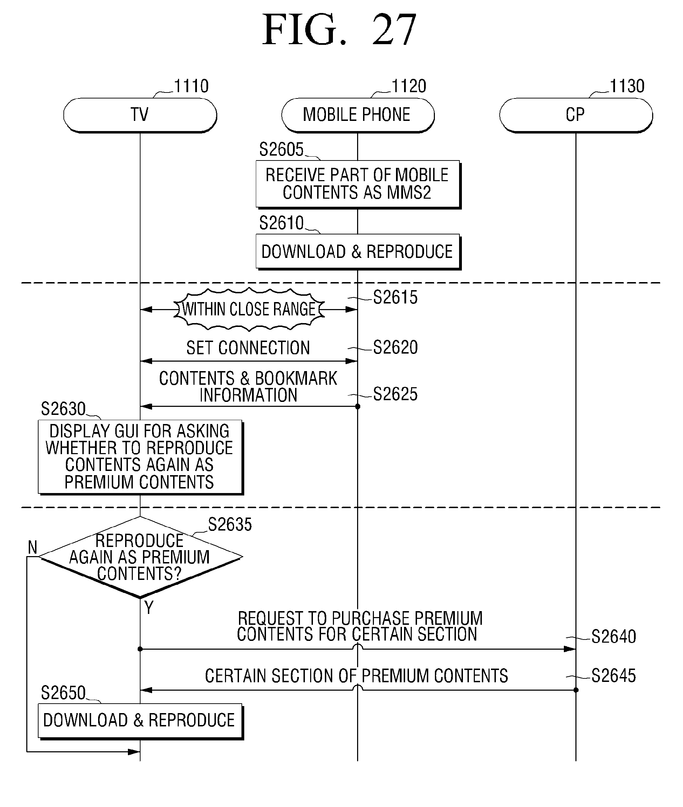

Hereinafter, a process of reproducing a part of mobile contents received through MMS again as premium contents is explained in detail with reference to FIG. 27.

### 9.3.1 Reproduction of Mobile Contents Received Through MMS in a Mobile Phone

Referring to FIG. 27, if a part of mobile contents are received through MMS, in step S2605, the mobile phone 1120 downloads and reproduces the mobile contents, in step S2610. Accordingly, a user may watch the downloaded part of the mobile contents through the mobile phone 1120.

The MMS received in step S2605 includes information indicating which section of the entire mobile contents the part of mobile contents belongs to. For example, the MMS includes information indicating that the part of mobile contents belongs to the section of "1:30:00∼1:40:00" from among the entire mobile contents of "0:00:00∼2:10:00".

### 9.3.2 Preparation to Reproduce Mobile Contents as Premium Contents

If a user returns home (i.e., the mobile phone 1120 is close to the TV 1110), in step S2615, a communicable connection is established between the mobile phone 1120 and the TV 1110, in step S2620.

If the connection in step S2620 is completed, the mobile phone 1120 transmits contents information and section information to the TV 1110, in step S2625. The contents information and section information, which are transmitted from the mobile phone 1120 to the TV 1110 in step S2625, may include: 1) information regarding mobile contents (e.g., the title of the mobile contents and episode (season) number) and 2) information regarding the afore-mentioned section.

Subsequently, the TV 1110 generates and displays a GUI for requesting user input according to a determination of whether to reproduce mobile contents again as premium contents, in step S2630.

### 9.3.3 Reproduction of Mobile Contents Again as Premium Contents on a TV

In step S2635-Y, if a user inputs a command to reproduce mobile contents again as premium contents through a GUI provided in step S2630, the TV 1110 requests the CP 1130 to provide premium contents which are the same as the mobile contents based on the information received in step S2625. Herein, only a part of mobile contents, which can be determined from the section information received in step S2625, is requested for purchase, in step S2640.

The CP 1130 transmits the requested part of the premium contents to the TV 1110, in step S2645. The TV 1110 downloads the part of the premium contents received in step S2645 and reproduces the contents, in step S2650.

Accordingly, the user may continuously view a part of the mobile contents that the user has already watched before returning home through the mobile phone 1120 as premium contents through the TV 1110, even after returning home.

### 9.4 Reproduction of Mobile Contents Partially Received for a Commercial Purpose Again as Premium Contents in Their Entirety9.4.1 Reproduction of Mobile Contents Received for a Commercial Purpose Through a Mobile Phone

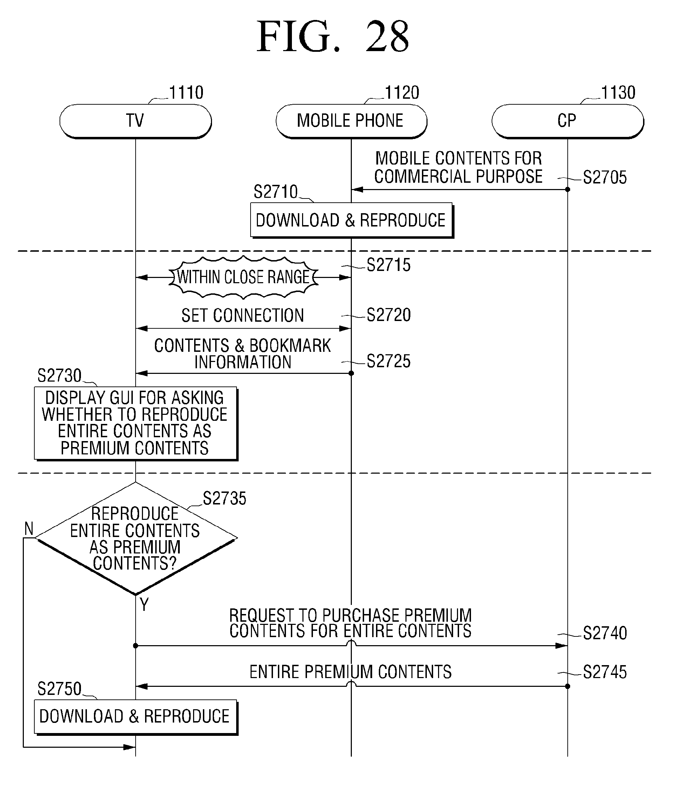

As illustrated in FIG. 28, if part of mobile contents produced for commercial purpose are received from the CP 1130, in step S2705, the mobile phone 1120 downloads and reproduces the contents, in step S2710. Accordingly, a user may watch the part of mobile contents through the mobile phone 1120.

### 9.4.1 Preparation to Reproduce Mobile Contents Partially Received as Premium Contents in Their Entirety

If a user returns home, and thus the mobile phone 1120 is close to the TV 1110, in step S2715, communicable connection is set between the mobile phone 1120 and the TV 1110, in step S2720.

If the connection in step S2720 is completed, the mobile phone 1120 transmits information regarding contents to the TV 1110, in step S2725. The contents information that is transmitted from the mobile phone 1120 to the TV 1110 in step S2725 may include 1) information regarding mobile contents (e.g., the title of the mobile contents and episode (season) number).

Subsequently, the TV 1110 generates and displays a GUI for requesting a user input for determining whether to reproduce mobile contents again as premium contents in their entirety, in step S2630.

Subsequently, the TV 1110 generates and displays a GUI for requesting a user input for determining whether to reproduce mobile contents again as premium contents, in step S2730.

### 9.4.3 Reproduction of Mobile Contents as Premium Contents in Their Entirety on a TV

In step S2735-Y, if a user inputs a command to reproduce mobile contents as premium contents through the GUI provided in step S2730, the TV 1110 requests, in step S2740, the CP 1130 to provide premium contents that are the same as the mobile contents based on the information received in step S2725.

The CP 1130 transmits the requested premium contents to the TV 1110, in step S2745. The TV 1110 downloads the entire premium contents received in step S2745 and reproduces the contents, in step S2750.

Accordingly, the user may continuously view the entire mobile contents that the user has already watched in part through the mobile phone 1120 before returning home, as premium contents through the TV 1110 even after returning home.

### 9.5 Change of High-quality Contents to Low-quality Contents

As described above, each display device has a different size and different capability. Accordingly, the same contents may be output differently according to the different characteristics of each display device. For example, a fixed terminal such as the TV 1110 may reproduce high quality contents having large volume, while a mobile terminal such as the mobile phone 1120 may reproduce low quality contents having relatively small volume, since the mobile phone 1120 has a storage apparatus and display panel with limited size and capability.

If seamless play is performed from the TV 1110 to the mobile phone 1120, contents reproduction may be changed from high quality to low quality.

For example, when a user watches high quality contents through the TV 1110 and moves to another room or goes out, if the user inputs seamless play through the mobile phone 1120, the mobile phone 1120 may receive the same contents as those on the TV 1110, but with a lower quality, from a contents provider. More specifically, a user may input information regarding contents that are currently being reproduced directly into the mobile phone 1120, or the mobile phone 1120 may request contents information to the TV 1110 and receive the requested contents. Accordingly, using the acquired information, the mobile phone 1120 may download a different version of the contents than the version displayed through the TV 1110, with lower quality, from a contents provider. In this case, the entire contents, or only the contents after the command for seamless play is input, may be downloaded.

Alternatively, if a user inputs a command for seamless play using the TV 1110 or the mobile phone 1120, the TV 1110 may convert the version of contents to correspond to the mobile phone 1120 and transmit the converted contents to the mobile phone 1120. In this case, if the TV 1110 has already stored the contents, the entire contents or a portion thereof may be converted into low quality contents and provided to the mobile phone 1120. However, if the contents are reproduced in real time, the TV 1110 may convert the contents into low quality contents as soon as the contents are received, and transmit the converted contents to the mobile phone 1120.

In order to convert high quality contents into low quality contents, various technologies such as down-scaling may be used.

### 9.6 Intervention of External Devices

According to the above-described embodiment of the present invention, seamless play may be ultimately performed among a plurality of display devices. In order to perform such seamless play appropriately, at least one external device such as a home server, an AP, and/or a CP may be involved.

According to another embodiment of the present invention, one of external devices may refer to property information of each display device, and if the property information differs amongst the display devices, the external device may reproduce the same contents with different properties suited to each respective display device.

Specifically, in a case where a network includes a TV, a home server, and a mobile phone, an event for initiating seamless play may occur while contents are reproduced on the TV. For example, the distance between the TV and the mobile phone may exceed a predetermined distance, or the TV may be turned off, or a command to perform seamless play may be input from a user.

In this case, the home server may select a mobile phone to perform seamless play and select a contents version corresponding to the properties of the mobile phone. Accordingly, the home server may request a contents provider to transmit contents in a selected version to the mobile phone. Alternatively, if the home server stores the contents internally, the home server may convert the contents into low quality contents and transmit the converted contents to the mobile phone.

To do so, the home server may store property information of each device, such as resolution and display size, in advance.

### 9.7 Alternatives

According to the above-described embodiments of the present invention, bookmark information may be transmitted from the mobile phone 1120 to the TV 1110, as an example. However, the bookmark information may alternatively be transmitted from the mobile phone 1120 to the CP 1130. In this case, if the CP 1130, upon receiving the bookmark information generates a message for asking whether to purchase premium contents and transmits the message to the TV 1110, it is desirable for the TV 1110 to generate a GUI for determining whether to reproduce the contents as premium contents continuously/repeatedly.

Meanwhile, it is more desirable for the CP 1130 to transmit, to the TV 1110, a message for asking whether to purchase premium contents to the TV 1110 when a user is able to watch the TV 1110. The CP 1130 may recognize that a user is able to watch the TV 1110 when the CP 1130 is notified from the TV 1110 that 1) the TV 1110 is close to the mobile phone 1120, or 2) the TV 1110 is turned on.

### 9. 8 Detailed Configuration of Devices

### 9. 8.1 TV

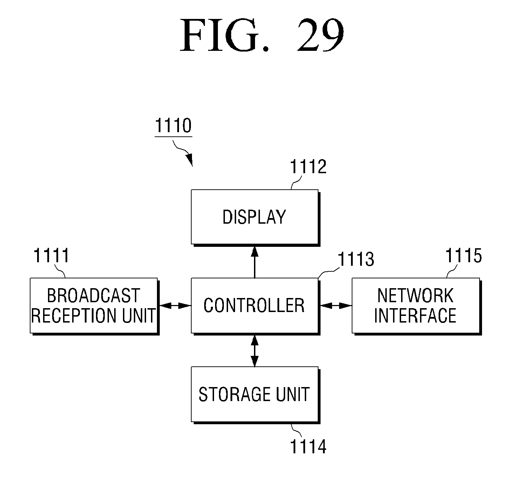

FIG. 29 is a detailed block diagram of the TV 1110 according to an embodiment of the present invention. Referring to FIG. 22, the TV 1110 includes a broadcast receiving unit 1111, a display 1112, a controller 1113, a storage unit 1114, and a network interface 1115.

The broadcast receiving unit 1111 performs basic functions of the TV 1110, such as receiving broadcasts via air, cable and/or satellite.

The network interface 1115 is communicably connected to the surrounding mobile phone 1120 and the CP 1130. The network interface 1115 receives requested contents from the CP 1130.

The display 1112 displays a broadcast program provided to the broadcast receiving unit 1111, contents received through the network interface 1115, and the aforementioned GUI.

The storage unit 1114 provides a storage space for programs and data that are necessary to drive the TV 1110 and for contents.

The controller 1113 controls the communication receiving unit 1111, the display 1112, the storage unit 1114 and the network interface 1115 to perform operations of the TV 1110, such as operations described with reference to FIGs. 22 to 28.

### 9. 8.2 Mobile Phone

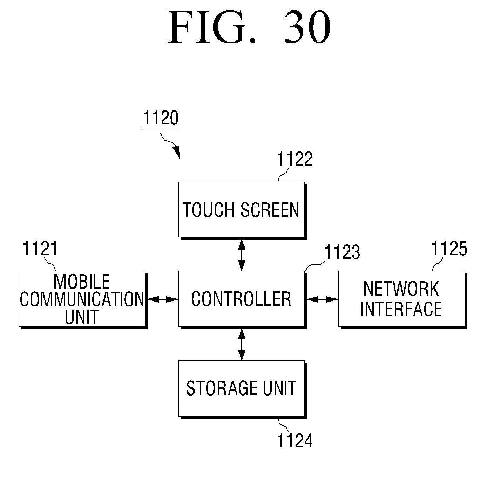

FIG. 30 is a detailed block diagram of the mobile phone 1120 according to an embodiment of the present invention. Referring to FIG. 30, the mobile phone 1120 includes a mobile communication unit 1121, a touch screen 1122, a controller 1123, a storage unit 1124, and a network interface 1125.

The mobile communication unit 1121 performs basic and auxiliary functions of the mobile phone 1120, such as mobile telephone communication, SMS, downloading and reproducing contents, and photography.

The touch screen 1122 displays mobile telephone communication information of the mobile communication unit 1121, a screen for providing SMS, reproducing contents, and the aforementioned GUI, and also receives a user's command through touch input.

The storage unit 1114 provides a storage space for programs and data that are used to drive the mobile phone 1120 and for contents.

The network interface 1125 is communicably connected to the surrounding TV 1110.

The controller 1123 controls the mobile communication unit 1121, the touch screen 1122, the controller 1123, the storage unit 1124, and the network interface 1125 to perform operations of the mobile phone 1120, such as operations described with reference to FIGs. 22 to 28.

### 9. 8. 3 Other Devices

The TV 1110 and the mobile phone 1120 described according to embodiments of the present invention are mere examples. Other kinds of devices may replace the TV 1110 and the mobile phone 1120 according to embodiments of the present invention.

In the above-described various embodiments of the present invention, only conversions between low resolution contents and high resolution contents are described, but conversion of contents is not limited to the conversion of resolution. For example, other characteristics including size, color setting status, or brightness may also be changed according to the characteristics of a reproducing device, in accordance with embodiments of the present invention.

According to the above description regarding FIGs. 22 to 30, contents with high resolution are purchased and provided by the CP, merely as an example. However, if contents have already been obtained and signal conversion processing can be performed on the resolution and volume of the contents, the TV 1110 or the mobile phone 1120 may directly convert and reproduce the contents.

For example, if a user who was watching mobile contents through the mobile phone 1120 returns home, the TV 1110 at home may receive the remaining contents, the entire contents, or bookmark information from the mobile phone 1120, and convert and reproduce the received contents according to the output characteristics of the TV 1110. In this case, if the mobile phone 1120 has a signal conversion processor, the mobile phone 1120 may convert the contents and provide the converted contents to the TV 1110.

Alternatively, if a user who was watching high-resolution contents through the TV 1110 goes out while carrying the mobile phone 1120, the TV 1110 may transmit the remaining contents or the entire contents directly to the mobile phone 1120. Alternatively, the TV 1110 may perform signal processing on the contents such as resolution adjustment and scaling corresponding to the output function of the mobile phone 1120 and then transmit the signal-processed contents to the mobile phone 1120. If the contents are transmitted from the TV 1110 without any conversion, the mobile phone 1120 may perform signal processing according to its own output function and then reproduce the contents.

In the above-described embodiments of the present invention, a specific device such as a TV and a mobile phone is used as an example. However, embodiments of the present invention are not limited to only a TV, but may also include other display devices such as a PC, a notebook PC, and a monitor. Further, embodiments of the present invention are not limited to only a general mobile phone but also other various mobile terminals such as a notebook PC, a PDA, an MP3 player, and a smart phone.

In addition, in the above various embodiments, a home server, AP, or a CP intervenes between a TV (i.e., a display device) and a mobile phone (i.e., a mobile terminal) as mere examples. In other words according to embodiments of the present invention, a display device may communicate with a mobile terminal directly. More specifically, various information regarding contents or contents themselves may be directly transmitted/received between a display device and a mobile terminal. The aforementioned home server, AP, or CP intervenes when there is indirect communication between a display device and a mobile terminal. Accordingly, seamless play can be performed between a display device and a mobile terminal in cases where the aforementioned apparatuses intervene.

In the various above-described embodiments of the present invention, seamless play is performed when various events, such as when the distance between a display device and a mobile terminal changes, or when power to a device is turned off. However, seamless play of contents may also be performed when other various events occur. For example, in accordance with embodiments of the present invention, if a menu for seamless play of contents is selected, a predetermined time approaches, or problems in a device are detected, seamless play may be performed in another device.

In the various above-described embodiments of the present invention, contents are reproduced seamlessly from a display device to a mobile phone, or vice versa. Entire contents may be reproduced, or the contents may be reproduced from a point where reproduction has stopped in a previous device, or reproduced from a point marked by a user. As such, part of contents may be reproduced in a next device in various ways. For example, the next device may receive a part of contents, instead of the entire contents, from one of external devices such as a previous device, a home server, an AP, and a CP. If a predetermined event for seamless play occurs in a device that is reproducing contents (e.g., a display device or a mobile terminal), the device stops reproducing the contents. In this case, the device may transmit the remaining contents to another device, which will perform seamless play.

Alternatively, if contents are transmitted from an external device such as a CP to a next device, the previous device may transmit information regarding the remaining contents to the external device such as a home server, an AP, and a CP. Accordingly, the external device may transmit the remaining contents to the next device. Herein, the information regarding the remaining contents may include a frame number, contents reproduction point from among entire contents reproduction time, and a field number.

According to another embodiment of the present invention, the device that is reproducing contents may transmit information regarding only the remaining contents to the next device directly or indirectly. In this case, the next device may reproduce only the contents that are not reproduced in the previous devices, even though the next device may receive the entire contents. In this case, the next device may request a contents provider to provide only the part of contents that are not reproduced in the previous contents, and the next device may subsequently receive and reproduce the contents.

According to another embodiment of the present invention, contents may be reproduced from a point bookmarked by a user. Although the format of contents reproduced in a display device and a mobile terminal is different from each other, the substance of the contents is the same. Therefore, reproduction time or seamless play time may be synchronized using the point of time where reproduction is stopped, a frame number, or a bookmark.

In addition, a sync signal may be used to perform seamless play between a display device and a mobile terminal. More specifically, the data being reproduced as well as a timing of reproduction may be synchronized. Such a sync signal may be generated directly from a display device or a mobile phone, or the sync signal may be generated from an external device such as home server, an AP, and a CP and provided to each device.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain embodiments thereof, it will be understood by those skilled in the art that various changes in form and detail may be made therein without departing from the spirit and scope of the invention, as defined by the appended claims.

## Claims

1. A method for seamlessly reproducing contents in a plurality of devices, the method comprising:
if an event for seamless play between a first device, which is reproducing the contents, and a second device occurs, identifying property information on the first device and the second device; and
if the property information of the first device and the second device is different from each other, performing, by the second device, seamless play by processing the contents into a version of the contents corresponding to the second device.

2. The method as claimed in claim 1, wherein the event is at least one of an event where a distance between the first device and the second device changes, an event where the first device is turned off, and an event where a command for seamless play is input.

3. The seamless play method as claimed in claim 1 or claim 2, wherein performing seamless play includes reproducing a part of the contents that is after a point in the contents where reproduction has stopped in the first device, or a part of the contents after a bookmarked point in the contents in the second device.

4. The seamless play method as claimed in any preceding claim, wherein performing seamless play includes requesting a contents provider corresponding to the second device to transmit contents in the version corresponding to the second device.

5. The seamless play method as claimed in any preceding claim, wherein performing seamless play comprises: converting the contents into the version corresponding to the second device; and
transmitting the converted contents to the second device directly.

6. The seamless play method as claimed in any preceding claim, further comprising:
if an event for reproducing contents in the first device occurs while contents corresponding to the second device are being reproduced in the second device, the second device performing seamless play by processing the contents being reproduced in the second device into a version of the contents corresponding to the first device.

7. The seamless play method as claimed in claim 6, wherein the first device performs seamless play of contents that are not reproduced in the second device, or performs seamless play of contents that are after a bookmarked point of the contents.

8. A contents reproducing method in a device, the method comprising:
identifying whether an event occurs based on a change in a distance between the device and another device or a change in a power status of the device or the another device; and
if the event occurs, performing seamless play of contents between the another device and the device.

9. The contents reproducing method as claimed in claim 8, wherein the performing seamless play comprises:
if the event occurs while first contents with a first image quality are being reproduced in the device, performing seamless play of second contents having a same substance as the first contents but also having a second image quality in the another device, at a point of the contents occurring after the first contents; and
if the event occurs while the second contents are being reproduced in the another device, performing seamless play of the first contents having the same substance as the second contents in the device, at a point of the contents reproducing after the second contents.

10. The contents reproducing method as claimed in claim 8 or claim 9, wherein if an event where a user carrying the another device enters a predetermined distance apart from the device occurs, performing seamless play includes reproducing contents that have been reproduced in the first image quality in the device, in the second image quality in the another device.

11. The contents reproducing method as claimed in claim 10, wherein if the event where the another device enters a predetermined distance apart from the device occurs, performing seamless play comprises:
transmitting information regarding contents that are currently being reproduced to the another device from the device;
receiving the contents that are currently being reproduced by the another device from a second contents provider different from a first contents provider for the device using information regarding the received contents; and
reproducing the received contents from a point of the contents where reproduction stops in the device.

12. The contents reproducing method as claimed in claim 11, wherein the information regarding the contents is channel information or Electronic Program Guide (EPG) information,
wherein the device is a television, and the another device is a mobile phone,
wherein the first contents provider is a contents provider for a terrestrial broadcast or a cable broadcast, and
wherein the second contents provider is a contents provider for a Digital Multimedia Broadcasting (DMB) broadcast.

13. The contents reproducing method as claimed in any one of claims 8 to 12, wherein if an event where the another device enters within a predetermined distance from the device occurs, performing seamless play includes reproducing contents that have been reproduced in a second image quality in the another device, in a first image quality in the device.

14. The contents reproducing method as claimed in claim 13, wherein if an event where the another device enters within the predetermined distance from the device occurs, performing seamless play further comprises:
transmitting, to the device, information regarding contents that are currently being reproduced from the another device;
receiving the contents by the device from a second contents provider that is different from a first contents provider for the another device using information regarding the contents; and
reproducing the received contents from a point of the contents where reproduction stops in the another device.

15. The contents reproducing method as claimed in claim 14, wherein the information regarding the contents is channel information or Electronic Program Guide (EPG) information,
wherein the device is a television, and the another device is a mobile phone,
wherein the first contents provider is a contents provider for a terrestrial broadcast or a cable broadcast, and
wherein the second contents provider is a contents provider for a Digital Multimedia Broadcast (DMB) broadcast.

16. The contents reproducing method as claimed in any one of claims 8 to 15, wherein performing seamless play further comprises:
transmitting, by the device or the another device, remaining contents after a point of the contents where reproduction stops to a counterpart device; and
seamlessly reproducing, by the counterpart device, the contents.

17. The contents reproducing method as claimed in any one of claims 8 to 16, wherein if an event where the device is turned off while reproducing the contents occurs, performing seamless play includes seamlessly reproducing the contents after the device is turned off in the another device.

18. The contents reproducing method as claimed in any one of claims 8 to 17, wherein if an event where the another device is turned off while reproducing the contents occurs, performing seamless play includes seamlessly reproducing contents in the device after the another is turned off.

19. The contents reproducing method as claimed in any one of claims 8 to 18, wherein performing seamless play includes reproducing remaining contents after a bookmarked point of the contents or after reproduction stops.

20. A display device, comprising:
a display for displaying reproduced contents; and
a controller for, if a distance between the display and a mobile terminal exceeds a predetermined distance while the contents are being displayed on the display or a turn-off command is input, processing to seamlessly reproduce the contents in the mobile terminal.

21. The display device as claimed in claim 20, wherein the display displays first contents in a first image quality,
wherein the controller controls the mobile terminal to seamlessly reproduce second contents having a same substance as first contents and having a second image quality by transmitting at least one of information regarding the first contents and the first contents to the mobile terminal.

22. The display device as claimed in claim 20 or claim 21, wherein if the mobile terminal is within the predetermined distance of the display or if the mobile terminal is turned off while second contents having a second image quality are being reproduced in the mobile terminal, the controller receives at least one of information regarding the second contents and the second contents from the mobile terminal and seamlessly reproduces first contents having a same substance as the second contents and a first image quality.

23. A mobile terminal, comprising:
a touch screen for displaying contents and receiving input; and
a controller for, if a distance between a display device and the mobile terminal exceeds a predetermined distance while the contents are being displayed on the display device or a turn-off command is input, seamlessly reproduces the contents through the touch screen.

24. The mobile terminal as claimed in claim 23, wherein the controller reproduces second contents having a second image quality that have a same substance as a first contents displayed through the touch screen by receiving at least one of information regarding the first contents having a first image quality that are reproduced on the display device and the first contents.

25. The mobile terminal as claimed in claim 23 or claim 24, wherein if the display device enters within a predetermined distance from the mobile terminal or a turn-off command is input while second contents having a second image quality are being displayed on the touch screen, the controller controls the display device to seamlessly reproduce first contents having a first image quality having a same substance as the second contents.
